Europäisches Patentamt

European Patent Office

Office européen des brevets

(19)

(11) Publication number: **0 063 553**
**B1**

# EUROPEAN PATENT SPECIFICATION

(12)

(45) Date of publication of patent specification: **07.08.85**

(51) Int. Cl.⁴: **A 01 B 59/06**

(21) Application number: **82850075.1**

(22) Date of filing: **07.04.82**

(54) Arrangement for coupling an implement to a tractor.

(30) Priority: **15.04.81 SE 8102431**

(43) Date of publication of application:
**27.10.82 Bulletin 82/43**

(45) Publication of the grant of the patent:
**07.08.85 Bulletin 85/32**

(84) Designated Contracting States:
**CH DE FR GB IT LI NL SE**

(56) References cited:
**FR-A-1 244 822**
**FR-A-1 402 458**
**FR-A-1 408 514**
**FR-A-1 430 128**
**FR-A-1 476 693**
**GB-A-1 103 555**
**GB-A-1 563 457**
**GB-A-1 568 052**
**US-A-3 432 184**
**US-A-3 498 638**

(73) Proprietor: **Tunamatic Handelsbolag**
**Mossebovägen 38**
**S-633 52 Eskilstuna (SE)**

(72) Inventor: **Nilsson, Rolf**
**Mossebovägen 38**
**S-633 52 Eskilstuna (SE)**
Inventor: **Lindström, Nils-Georg**
**Frasta**
**S-64040 Stora Sundby (SE)**

(74) Representative: **Kierkegaard, Lars-Olov et al**
**H. ALBIHNS PATENTBYRA AB Box 7664**
**S-103 94 Stockholm (SE)**

Courier Press, Leamington Spa, England.

## Description

A variety of different implements are coupled to tractors. Most of the implements are coupled to the rear of the tractor, and some are front-mounted. Special towing devices have been arranged for drawn implements. Many implements are completely or partially carried by the tractor by coupling together the implement and a hydraulically operated 3-point linkage on the tractor. To facilitate the use of the 3-point linkage, there are special coupling devices which make it possible for the operator to couple together the tractor and the implement while sitting in the operator's seat. The ideal coupling device should meet the following requirements:

— The coupling operations must be easily actuated and controlled from the operator's seat.

— The coupling device must provide for simple coupling and uncoupling without requiring precision manoeuvring.

— The coupling device must provide positive coupling even when there is reasonable obliqueness and/or lateral displacement of the tractor relative to the implement, and move the implement only slightly during coupling.

— The coupling operation must be easily visible from the operator's seat.

— The coupling device must have a reliable locking mechanism the correct functioning of which must be able to be checked from the operator's seat.

— The locking mechanism must not take up the forces transmitted between the tractor and implement.

— The functioning of the locking mechanism must not be sensitive to dirt or ice.

— The coupling device must have a small longitudinal dimension so that the implement can be coupled close to the tractor, thus providing good stability and steering capacity for the tractor. For road use, there are legal requirements on the tractor front wheel pressure against the road surface. If there is a large rear overhang, it can be necessary to provide the front of the tractor with counter weights, providing undesirable increased load on the wheels and axles, which should be avoided.

— The coupling device should provide a large space for parts extending from the implement, e.g. spring loaded trigger devices for plows.

— The coupled tractor frame and implement frame must provide a stable union.

— The coupling device must not appreciably reduce the free space behind the tractor in those cases where a protected power transmission shaft has been coupled to the tractor power take-off.

— The coupling device must be safe especially in those cases where a person is forced to work behind the tractor for connecting a power transmission shaft.

— The coupling device must be reasonable in capital outlay and simple in application.

The present invention relates to coupling devices as set out above and in particular to a coupling device according to the preamble of the attached claim 1. Such a coupling device is known from FR—A—1 402 458. A major drawback thereof is that it requires good alignment between the tractor and the implement in order to make coupling possible: even so, very delicate manoeuvring is called for. A further drawback is that the acute angle between the frame legs do not leave enough space for parts protruding from the implement. This makes it necessary to locate the implement coupling frame at the extreme front or even in front of the implement, which thus is shifted to the rear with respect to the tractor, creating an undesirable upturning moment on the tractor.

Further coupling devices of this kind are known from FR—A—1 408 514 and GB—A—1 103 555. Both of these have cross members interconnecting the lower ends of the sloping frame legs. Such cross members even further impose on the cramped space at the rear of the tractor and the front of the implement, making manual operations such as coupling a power take-off difficult. GB—A—1 103 555 shows an implement frame made of downwardly open channel members, which straddle the tractor frame in engaged position. While this solution per se provides good looking properties, the known device still requires precision manoeuvring of the tractor and the three-point linkage when coupling the frames together.

The drawbacks of these known devices are eliminated and all the requirements listed above are fulfilled by a coupling device according to the present invention having the characteristic features set out in the attached claim 1.

Further advantages of the invention are realised with the features set out in the sub-claims.

An embodiment of the inventive idea will be described in more detail with the aid of the accompanying drawings of which:

Figure 1 shows a coupling device frame on a tractor, in rear view towards the tractor

Figure 2 shows the frame according to Fig. 1 as seen from the side

Figure 3 shows an interacting coupling device frame on the implement as seen from the side

Figure 4 shows the frame of Fig. 3 viewed from the rear, in the normal direction of movement of the tractor, and

Figure 5 shows a side view of the coupling device frames on the tractor and on the implement in engaged position.

The Coupling Device Frame on the Tractor

The coupling device comprises two interengageable frames for attachment to the tractor and the implement, resp.

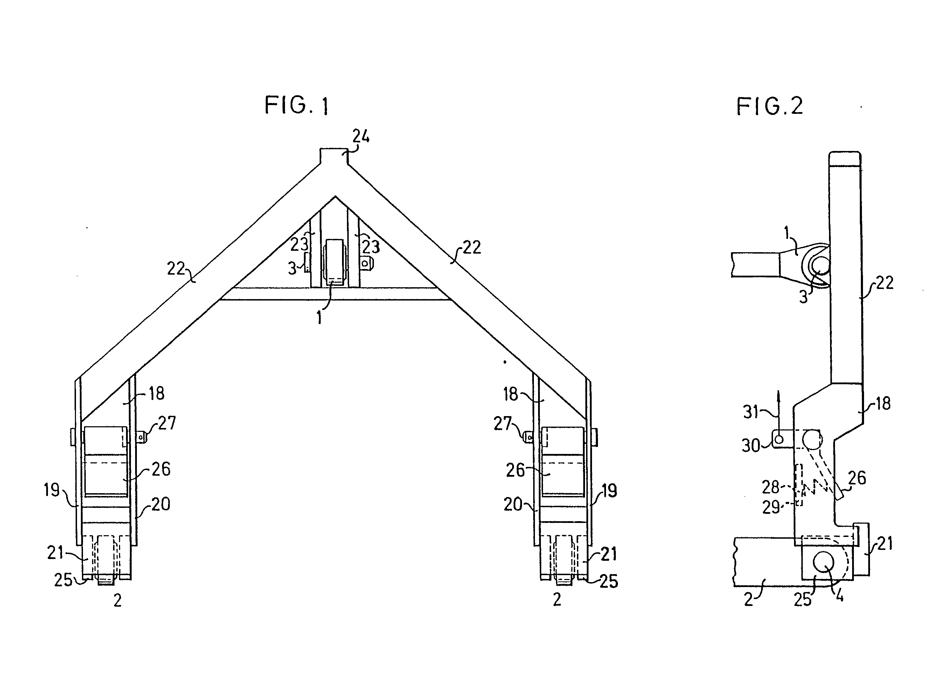

As revealed in Figs. 1 and 2, the tractor coupling frame comprises two vertical frame members 18 placed on either side of the line of symmetry of the tractor. Each of the frame members consists of two side pieces 19 and 20 which are connected to an upwardly open hook 21 at the bottom and facing away from the tractor. The side pieces 19 and 20 are joined at the top to an inclined guide beam 22. The symmetrically placed guide beams 22 form together an inverted V with an angle between the guide beams which should preferably be obtuse. At the top of the frame construction, a mount 23 is arranged for attaching the top link 1 of the tractor three-point linkage. A special guide projection 24 is arranged on the top of the frame.

At the bottom of each frame member 18, there is a mount 25 for mounting the lower hitch points 4 on the lower links 2 of the tractor three-point linkage.

The geometric dimensions of the frame construction are determined primarily by the standardized distances between the lower hitch points 4 of the tractor and the vertical distance between them and the upper connection point 3.

This design of the frame, which is opened downwards, provides a large interior free space which is of importance.

Between the side pieces 19 and 20 there is placed a latch 26. It is pivotable about a clevis pin 27 and is loaded by a spring 28 fixed at its other end against a spring stop 29. The latch is provided with a lever 30 to which an operating means 31 has been connected. By pulling the operating means 31, it is possible to pivot the latch 26 from a locking position to a release position.

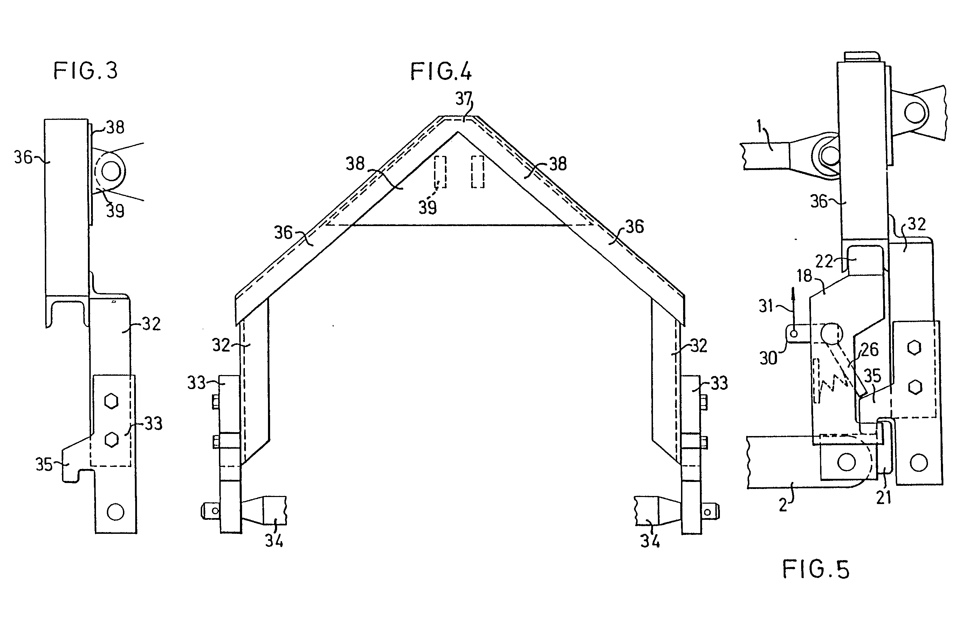

The Coupling Device Frame on the Implement The implement coupling frame, Figs. 3 and 4, has two vertically placed frame members 32, each provided at the bottom with a mount 33 for fixing the implement (exemplified here by the support bar 34 of a plow).

The frame members 32 are connected at the top to symmetrically placed coupling beams 36, which are U-beams with the legs pointing downwards. The distance between the legs on the beams 36 is selected so as to let the coupling beams 36 straddle the guide beams 22 of the tractor coupling frame in the coupling position.

The interior limiting surfaces of the coupling beams 36 coincide with the geometric external shape of the guide beams 22 of the tractor frame. An opening 37 is arranged at the top where the coupling beams 36 meet, said opening cooperating, for coupling, with the guide projection 24 on the tractor coupling frame.

The mounts 33 are designed with downwardly open hooks 35 which face away from the implement and are spaced so that they coincide with the position of the hooks 21 on the tractor frame. The vertical distance from the lower edge of the coupling beams 36 to the lower edge of the hooks 35 corresponds to the vertical distance, in the tractor coupling frame, from the top of the guide beams 22 to the top of the hooks 21.

A rear wall 38 is arranged on the upper portion of the implement coupling frame, having the dual purposes of reinforcing the frame and assisting in the coupling together of the frames. The rear wall is provided with a mount 39 which is to be coupled to the corresponding hitch point on the implement.

Implement hitch points can vary greatly due to the variety of existing implements. Therefore the mounting arrangement shown here is only to be regarded as one of many examples.

Function

The coupling device frames are mounted on the tractor and on the implement, resp.

For coupling, the tractor is driven towards the implement. Before the tractor coupling frame reaches the implement frame, the top of the tractor coupling frame is inclined backwards somewhat by activating the hydraulic top link cylinder 1. With the aid of the tractor, the guide projection 24 of the tractor coupling frame is moved towards the downwardly directed coupling beams 36 of the implement coupling frame, the rear wall 38 assisting in the guiding of the top of the tractor coupling frame. The guide projection will then move between the legs of the coupling beams 36. By raising the tractor coupling frame with the hydraulic lift of the tractor and at the same time bringing the tractor coupling frame to a vertical position by reducing the length of the top link 1 with the cylinder, the coupling beams 36 of the implement coupling frame will slide onto the guide beams 22 of the tractor coupling frame. As the tractor hydraulic system lifts and pulls the implement coupling frame towards the tractor coupling frame, the hooks 35 on the implement coupling frame will be pulled in towards and over the cooperating hooks 21 on the tractor coupling frame. At the end of the coupling movement, the projection 24 on the tractor coupling frame is guided into the opening 37 in the implement coupling frame. The coupling movement is ended when the legs of the coupling beams 36 of the implement coupling frame are straddled over the guide beams 22 of the tractor coupling frame. The coupling beams 36 of the implement coupling frame descend over the guide beams 22 on the tractor coupling frame and at the same time the lower hooks 35 engage the hooks 21 on the tractor coupling frame.

Towards the end of the coupling movement, the spring-loaded latch 26 has been pressed in by the hook 35 and when the coupling between the tractor and implement coupling frames is completed, the spring 28 presses the latch 26 back to the locking position. The function of the latch 26 is to lock the frames together, and it does not participate in the force transmission from the tractor coupling frame to the implement coupling frame when the tractor with implement is in operation.

By looking at the lever 30 of the latch 26 it is possible for the operator to check from the operator's seat that the latch has assumed the locking position.

The coupling can be carried out even if the tractor is displaced somewhat angularly or laterally in relation to the implement. In the coupling operation, the coupling beams 36 of the implement coupling frame will also be turned relative to the guide beams 22 of the tractor coupling frame, until the positions of the coupling beams and the guide beams coincide and the coupling is then completed.

If the implement is standing on uneven ground or when the implement is inclined laterally, a lift rod gear on the three-point linkage can twist the tractor coupling frame so that its lateral inclination agrees with that of the implement coupling frame.

Figure 5 shows the two coupling frames coupled completely together.

For uncoupling, the operating means 31 of the latches 26 are actuated by the tractor operator so that the latches 26 release the hooks 35. The implement is then lowered with the hydraulic lift so that the parking stands rest on the ground. As the lowering movement is continued, the tractor coupling frame is lowered, and disengages from the implement coupling frame. The lowering movement is effected only by the weight of the lift means and the tractor coupling frame, and in order for the tractor coupling frame to be lowered and freed from the implement coupling frame, it can be necessary to extend or retract the hydraulic top link 1 if the tractor coupling frame and the implement coupling frame have become stuck together.

The invention is not limited to the above embodiment. Rather it encompasses all variations covered by the following claims. Thus, the coupling device can be applied not only to 3-point tractor linkages, but also to a front-mounted tractor coupling for mounting a front loader or other front-mounted tractor implement.

## Claims

1. A tractor implement coupling device comprising a tractor coupling frame (18, 22) having means (23, 25) for connection to a tractor three-point linkage (1, 2) or similar, an implement coupling frame (36, 32) having means (39, 33) for connection to an implement (34), each frame having the general shape of an inverted V, and being open downwards between the V-legs (18, 32), the tractor coupling frame being arranged to be moved upwardly into interengagement with the implement coupling frame, and locking means (22, 36; 21, 35) at the top portions of the frames, by way of the upper part of the tractor coupling frame engaged in the upper part of the implement coupling frame, and also at the bottom portions of the frames by means of hooks of the tractor coupling frame engaging parts of the implement coupling frame, all said locking means in the engaged position of the frames preventing disengagement thereof, characterized in that the legs of the tractor coupling frame are formed by guide beams (22), which are joined at the apex, and by frame members (18) joined to the lower ends of the guide beams (22) and extending vertically downward therefrom; that the legs of the implement coupling frame are formed by coupling beams (36) of downwardly open U-section, which are joined at the apex, and by frame members (32) joined to the lower ends of the coupling beams (36) and extending vertically downward therefrom; that the internal width of the open U-section of the coupling beams (36) is such that in the engaged position of the frames the coupling beams (36) contain, in their open U-section, the guide beams (22), thus forming said top locking means; that on the side facing the opposite frame each vertical frame member (18; 32) is provided with a hook (21; 35) at the lower end thereof, the hooks (21) of the tractor coupling frame (22, 18) being open upwards and the hooks (35) on the implement coupling frame (36, 32) being open downwards; and that the vertical distance from the lower edge of the U-shaped coupling beams (36) to the lower edge of the implement coupling frame hooks (35) corresponds to the vertical distance from the top of the guide beams (22) to the top of the tractor coupling frame hooks (21), thereby allowing positioning of the implement coupling frame hooks (35) above the tractor coupling frame hooks (21) prior to complete engagement of the tractor and implement coupling frames, whereas in the engaged position of the frames with the coupling beams (36) straddling the guide beams (22), the tractor and implement coupling frame hooks (21; 35) are interengaged.

2. A device according to Claim 1, characterized in that the apex angle of each coupling frame (22, 18; 36, 32) is obtuse.

3. A device according to Claim 1 or 2, characterized in that the apex of the tractor coupling frame is provided with a guide projection (24) which interacts with the coupling beams (36) of the implement coupling frame during coupling, and, in full engagement, penetrates into and up through an opening (37) at the apex of the implement coupling frame, then becoming visible, indicating that the coupling frames are in engagement.

4. A device according to any one of Claims 1—3, characterized in that the upper portion of the implement coupling frame is provided with a rear wall (38) which reinforces the frame and facilitates engagement of the tractor and implement coupling frames.

5. A device according to any one of Claims 1—4, characterized in that the tractor coupling frame is provided with spring-loaded latches (26) which in the coupled position of the tractor and implement coupling frames assume a locking position preventing disengagement of the frames; and that the latches are pivotable against the spring action to a release position permitting disengagement of the frames.

6. A device according to Claim 5, characterized in that the latches (26) are pivotable to their release position by actuating an operating mechanism, wire, Bowden cable or the like, from the operator's seat.

7. A device according to Claim 5 or 6, characterized in that the respective latch (26) is provided

**0 063 553**

with a lever (30) visible from the operator's seat and indicating by its position whether the latch assumes its locking position.

## Revendications

1. Dispositif d'attelage d'un outil de tracteur comportant un bâti d'attelage de tracteur (18, 22) ayant des moyens (23, 25) pour se raccorder à un attelage trois points de tracteur (1, 2) ou à un dispositif similaire, un bâti d'attelage d'outil (36, 32) ayant des moyens (39, 33) pour se raccorder à un outil (34), chaque bâti ayant la forme générale d'un V inversé et étant ouvert vers le bas entre les branches du V (18, 32), le bâti d'attelage du tracteur étant disposé pour être déplacé vers le haut pour coopérer avec le bâti d'attelage de l'outil, et des moyens de verrouillage (22, 36; 21, 35) situés dans les portions supérieurs des bâtis, par le fait que la partie supérieure de bâti d'attelage du tracteur coopère avec la partie supérieure du bâti d'attelage de l'outil, et également au niveau des portions inférieures des bâtis au moyen de crochets du bâti d'attelage du tracteur venant en prise avec des parties du bâti d'attelage de l'outil, tous ces moyens de verrouillage empêchant, lorsque les bâtis sont couplés ensemble, leur dégagement, caractérisé en ce que les branches du bâti d'attelage du tracteur sont formées par des profilés de guidage (22) qui sont reliés à leurs sommets et par des éléments de bâti (18) reliés aux extrémités inférieurs des profilés de guidage (22) et s'en étendant verticalement vers le bas, en ce que les branches du bâti d'attelage de l'outil sont formées par des profilés d'attelage (36) de section en U ouverte vers le bas, qui sont reliés à leurs sommets, et par des éléments de bâti (32) reliés aux extrémités inférieures des profilés d'attelage (36) et s'en étendant verticalement vers le bas, en ce que la largeur intérieure de la section en U ouvert des profilés d'attelage (36) est telle que, lorsque les bâtis sont couplés ensemble, les profilés d'attelage (36) renferment dans leurs sections en U ouvert les profilés de guidage (22), formant ainsi les moyens de verrouillage supérieurs; en ce que, sur le côté en vis-à-vis du bâti opposé, chaque élément de bâti vertical (18, 32) est équipé d'un crochet (21, 35) à son extrémité inférieure, les crochets (21) du bâti d'attelage du tracteur (22, 18) étant ouverts vers le haut et les crochets (35) du bâti d'attelage de l'outil (36, 32) étant ouverts vers le bas, et en ce que la distance verticale entre le bord intérieur des profilés d'attelage en forme de U (36) justu'au bord inférieur des crochets (35) du bâti d'attelage de l'outil correspond à la distance verticale du sommet des profilés de guidage (22) au sommet des crochets (21) du bâti d'attelage du tracteur, permettant ainsi de positionner les crochets (35) du bâti d'attelage de l'outil sur les crochets (21) du bâti d'attelage du tracteur avant accouplement complet des bâtis d'attelage du tracteur et de l'outil, tandis que, lorsque les bâtis sont couplés ensemble avec les profilés d'attelage (36) recouvrant les profilés de guidage (22), les crochets (21, 35) des bâtis d'attelage du tracteur et de l'outil coopèrent totalement ensemble.

2. Dispositif selon la revendication 1, caractérisé en ce que l'angle au sommet de chaque bâti d'attelage (22, 18; 36, 32) est obtus.

3. Dispositif selon la revendication 1 ou 2, caractérisé en ce que le sommet du bâti d'attelage du tracteur est équipé d'une saillie de guidage (24) qui coppère avec les profilés d'attelage (36) du bâti d'attelage de l'outil lors de l'opération d'attelage et que, lorsque la coopération est totale, cette saillie pénètre à travers une ouverture (37) au sommet du bâti d'attelage de l'outil, devenant ainsi visible et indiquant que les bâtis d'attelage sont bien couplés l'un avec l'autre.

4. Dispositif selon l'une quelconque des revendications 1 à 3, caractérisé en ce que la partie supérieure du bâti d'attelage de l'outil est équipée d'une paroi arrière (38) qui renforce le bâti et facilite l'accouplement des bâtis d'attelage du tracteur et de l'outil.

5. Dispositif selon l'une quelconque des revendications 1 à 4, caractérisé en ce que le bâti d'attelage du tracteur est équipé de verrous (26) assujettis à des ressorts qui, dans la position accouplée des bâtis d'attelage du tracteur et del'outil, prend une position de verrouillage empêchant le dégagement des bâtis et en ce que les verrous peuvent pivoter contre l'action des ressorts jusqu'à une position de libération permettant le dégagement des bâtis.

6. Dispositif selon la revendication 5, caractérisé en ce que les verrous (26) peuvent pivoter jusqu'à leur position de libération par l'actionnement d'un mécanisme de commande, câble, câble Bowden, ou l'analogue, depuis le siège de l'utilisateur.

7. Dispositif selon la revendication 5 ou 6, caractérisé en ce que le verrou respectif (26) est équipé d'un levier (30) visible du siège de l'utilisateur et indiquant par sa position si le verrou est bien en position de verrouillage.

## Patentansprüche

1. Vorrichtung zum Kuppeln eines Arbeitsgerätes an einen Traktor, mit einem Traktor-Kupplungsrahmen (18, 22) mit einer Einrichtung (23, 25) zum Anschließen an ein Traktor-Dreipunktgestänge (1, 2) oder dgl., einem Arbeitsgerät-Kupplungsrahmen (36, 32) mit einer Einrichtung (39, 33) zum Anschließen an ein Arbeitsgerät (34), wobei jeder Rahmen die allgemeine Gestalt eines umgekehrten V hat und zwischen den V-Schenkeln (18, 32) nach unten offen ist und der Traktor-Kupplungsrahmen nach oben in den Eingriff mit dem Arbeitsgerät-Kupplungsrahmen bewegbar ist, und einer Verriegelungseinrichtung (22, 36; 21, 35) an den Kopfabschnitten der Rahmen für den Eingriff des oberen Teils des Traktor-Kupplungsrahmens in den oberen Teil des Argeitsgerät-Kupplungsrahmens, und an den Bodenabschnitten der Rahmen in Form von Haken des Traktor-Kupplungsrahmens, die in Teile des Arbeitsgerät-Kupplungsrahmens eingreifen, wobei von sämtlichen der genannten Verriegelungsteilen in der Eingriffsposition der Rahmen verhindert wird, daß diese sich voneinander lösen, dadurch gekennzeichnet, daß die Schenkel des Traktor-Kupplungsrahmens aus Führungsträgern (22), die an dem Scheitel miteinander verbunden sind, und von Rahmenteilen (18) gebildet werden, die an den unteren Enden der Führungsträger (22) angeschlossen sind und sich von dort aus vertikal nach unten erstrecken, daß die Schenkel des Arbeitsgerät-Kupplungsrahmens von an dem Scheitel miteinander verbundenen Kupplunsträgern (36) mit nach unten offenem U-Querschnitt und von Rahmenteilen (32) gebildet werden, die an die unteren Enden der Kupplungsträger (36) angeschlossen sind und sich von dort vertikal nach unten erstrecken, daß die Innenweite des offenen U-Querschnitts der Kupplungsträger (36) derart ist, daß in der Eingriffsstellung der Rahmen die Kupplungsträger (36) die Führungsträger (22) in ihrem offenen U-querschnitt enthalten und in dieser Weise die Kopfverriegelungseinrichtung ausbilden, daß an der dem gegenüberliegenden Rahmen zugewendeten Seite jeder vertikale Rahmenteil (18; 32) mit einem Haken (21; 35) am unteren Ende versehen ist, wobei die Haken (21) des Traktor-Kupplungsrahmens (22, 18) nach oben und die Haken (35) des Arbeitsgerät-Kupplungsrahmens (36, 32) nach unten offen sind, und daß der vertikale Abstand des unteren Randes der U-förmigen Kupplungsträger (36) von dem oberen Rand der Haken (35) des Arbeitsgerät-Kupplungsrahmens dem vertikalen Abstand des Kopfes der Führungsträger (22) von dem Kopf der Haken (21) des Traktor-Kupplungsrahmens entspricht und dadurch das Anordnen der Haken (35) des Artbeitsgerät-Kupplungsrahmens über den Haken (21) des Traktor-Kupplungsrahmens vor dem Vollständigen Ineinandergreifen der Kupplungsrahmen des Traktors und des Arbeitsgeräts zugelassen ist, wohingegen in der Eingriffsposition der Rahmen, in welcher die Kupplungsträger (36) auf den Führungsträgern (32) reiten, die Haken (21; 35) des Kupplungsrahmens des Traktors und des Arbeitsgerätes ineinandergreifen.

2. Vorrichtung nach Anspruch 1, dadurch gekennzeichnet, daß der Scheitelwinkel jedes Kupplungsrahmens (22, 18; 36, 32) ein stumpfer Winkel ist.

3. Vorrichtung nach Anspruch 1 oder 2, dadurch gekennzeichnet, daß der Scheitel des Traktor-Kupplungsrahmens mit einem Führungsansatz (24) versehen ist, der während des Kuppelns mit den Kupplungträgern (36) des Arbeitsgerät-Kupplungsrahmens zusammenwirkt und beim vollständigen Ineinandergreifen derselben in eine Öffnung (37) am Scheitel des Arbeitsgerät-Kupplungsrahmens eindringt und durch die Öffnung hindurchdringt und dann zum Anzeigen, daß die Kupplungsrahmen im Eingriff sind, sichtbar wird.

4. Vorrichtung nach einem der Ansprüche 1 bis 3, dadurch gekennzeichnet, daß der obere Teil des Arbeitsgerät-Kupplungsrahmens mit einer Rückwand (38) versehen ist, von welcher der Rahmen versteift wird und der Eingriff des Kupplungsrahmens des Traktors und des Kupplungsrahmens des Arbeitsgeräts begünstigt wird.

5. Vorrichtung nach einem der Ansprüche 1 bis 4, dadurch gekennzeichnet, daß der Traktor-Kupplungsrahmen mit federbelasteten Klinken (26) versehen ist, die in der Kupplungsposition der Kupplungsrahmen des Traktors und des Arbeitsgeräts eine Verriegelungsposition einnehmen und das Lösen der Rahmen voneinander verhindern, und daß die Klinken gegen die Kraft der Feder in eine Entriegelungsposition schwenkbar sind, in welcher das Lösen der Rahmen voneinander zugelassen ist.

6. Vorrichtung nach Anspruch 5, dadurch gekennzeichnet, daß die Klinken (26) in ihre Entriegelungsposition durch Betätigen eines Betätigungsmechanismus, eines Drahtes, einen Bowdenzugs oder dgl. vom Bedienungssitz aus schwenkbar sind.

7. Vorrichtung nach Anspruch 5 oder 6 dadurch gekennzeichnet, daß die jeweilige Klinke (26) mit einem Hebel (30) versehen ist, der von dem Bedienungssitz aus sichtbar ist und durch seine Position anzeigt, ob die Klinke ihre Verriegelungsposition einnimmt.

FIG.2

FIG. 1

FIG.3

FIG.4

FIG.5

36
38
39
32
33
35
33

37
38
38
39
36
36
32
33
32
33
34
34

1
36
32
22
18
31
30
26
35
2
21

0 063 553

2